# EUROPEAN PATENT APPLICATION

(11) **EP 4 668 495 A1**
(43) Date of publication of application: **24.12.2025**
(21) Application number: 25161998.7
(22) Date of filing: 06.03.2025
(51) Int. Cl.: H01R 4/62, H01R 13/52, H01R 4/70, B60L 53/10, B60R 16/00, H01M 50/50, H01R 43/00, H01R 43/02, H02G 3/00, H02G 5/00, H01R 4/34, H01R 11/26

(54) **BUSBAR CONNECTOR WITH INSULATIVE HOUSING AND SEALING MECHANISM**

(30) Priority: 18.06.2024 US 202463661137 P; 28.01.2025 US 202519038786
(71) Applicant: Aptiv Technologies AG, 8200 Schaffhausen (CH)
(72) Inventor: DURSE, Nicholas, 8200 Schaffhausen (CH); HANDO, Nathan, 8200 Schaffhausen (CH); BOHAN, Andrew, 8200 Schaffhausen (CH); LESNIAK, Pawel, 8200 Schaffhausen (CH); DANIEC, Mateusz, 8200 Schaffhausen (CH)
(74) Representative: Bardehle Pagenberg Partnerschaft mbB Patentanwälte Rechtsanwälte

(57) **Abstract**

An electrical busbar connector (104) includes an electrically insulative connector housing (202) with a cavity designed to accommodate an electrical busbar (102) made of a first electrically conductive material and an electrical terminal (206) attached to the busbar (102), which is composed of a second electrically conductive material distinct from the first. The connector (104) further comprises a busbar seal (502) that ensures a secure seal between the busbar (102) and the connector housing (202), thereby enhancing the integrity and reliability of the electrical connection. This configuration allows for effective insulation and protection of the busbar (102) and terminal (206), facilitating efficient electrical connectivity while minimizing potential for electrical faults or environmental contaminant ingress.

## Description

The subject matter disclosed herein relates to sealed connectors configured for use with electrical busbars, particularly sealed connectors that are well-suited for busbars used to connect with charge inlets of electric vehicles.

Prior electrical conductors used to interconnect charging inlets in electric vehicles have typically used large diameter high voltage wire cable. These cables are large, heavy, and their flexibility may make them unwieldy, especially for automated assembly and installation of the conductors into the vehicle. Other electrical conductors used to interconnect charging inlets have included rigid busbars, however, these busbars have been shrouded in metal tubes that also do not lend themselves to automated assembly and installation in the vehicle.

Previous approaches to electrical busbar assemblies have typically involved utilizing busbars with uniform insulation along their entire length. These conventional busbars are often connected to electrical terminals using various types of connectors, such as screw terminals or crimp connectors, which may not provide optimal electrical conductivity or mechanical stability. Additionally, the insulation on the busbars may not always be sufficient to prevent electrical arcing or short circuits in high-voltage applications.

In some instances, busbar assemblies have included insulative housings to protect the electrical connections and terminals. However, these housings have often been bulky and cumbersome, making it challenging to install and maintain the busbar assembly in tight spaces or complex electrical systems. Furthermore, the covers used to enclose the housings have not always provided adequate protection against environmental factors or accidental contact with the electrical components.

Overall, the existing approaches to electrical busbar assemblies have addressed some aspects of electrical insulation and connection stability but have not fully optimized the design for efficient electrical conductivity, mechanical stability, and environmental protection. However, none of these approaches have provided a comprehensive solution that combines the features described in this disclosure.

In some aspects, the techniques described herein relate to an electrical busbar connector. The electrical busbar connector includes an electrically insulative connector housing having a cavity configured to receive an electrical busbar including a first electrically conductive material. electrical busbar connector also incvludes an electrical terminal including a second electrically conductive material distinct from the first electrically conductive material. The electrical terminal is attached to the busbar. The electrical busbar connector further includes a busbar seal configured to seal the busbar to the connector housing.

In some aspects, the techniques described herein relate to a method of manufacturing an electrical busbar assembly. The metod incldues the steps of welding an electrical terminal to an uninsulated portion of an electrical busbar, inserting the electrical terminal within a cavity in an electrically insulative connector housing, sealing an insulated portion of the electrical busbar to the connector housing, inserting a threaded fastener through an aperture in the electrical terminal and attaching a cover to the connector housing configured to enclose the cavity. The cover includs a cover seal configured to seal the cover to the connector housing.

Embodiments of the present invention will now be described by way of example with reference to the accompanying drawings, in which:
**FIG. 1** shows an isometric view of a busbar assembly according to some embodiments.
**FIG. 2A** shows a top isometric view of a sealed connector of a busbar assembly with a cover open according to some embodiments.
**FIG. 2B** shows a bottom isometric view of the sealed connector of **FIG. 2A** with a cover open according to some embodiments.
**FIG. 3** shows a top isometric view of the sealed connector of **FIG. 2A** with the cover closed according to some embodiments.
**FIG. 4** shows a cross-section view of the sealed connector of **FIG. 2A** according to some embodiments.
**FIG. 5** shows another cross-section view of the sealed connector of **FIG. 2A** according to some embodiments.
**FIG. 6** shows an isometric view of the sealed connector of **FIG. 2A** and a corresponding mating connector according to some embodiments.
**FIG. 7** shows a cross-section view of the sealed connector of **FIG. 2A** and the corresponding mating connector according to some embodiments.
**FIG. 8** shows an isometric view of the sealed connector of **FIG. 2A** and an alternative mating connector according to some embodiments.
**FIG. 9** shows a cross-section view of the sealed connector of **FIG. 2A** and the alternative mating connector according to some embodiments.
**FIG. 10** shows a flowchart of a method of manufacturing an electrical busbar assembly according to some embodiments.

The present disclosure describes an electrical busbar assembly with a sealed electrical connector. The sealed electrical bus connector is particularly well suited for a wiring harness and connection system in an electric vehicle or a hybrid electric vehicle.

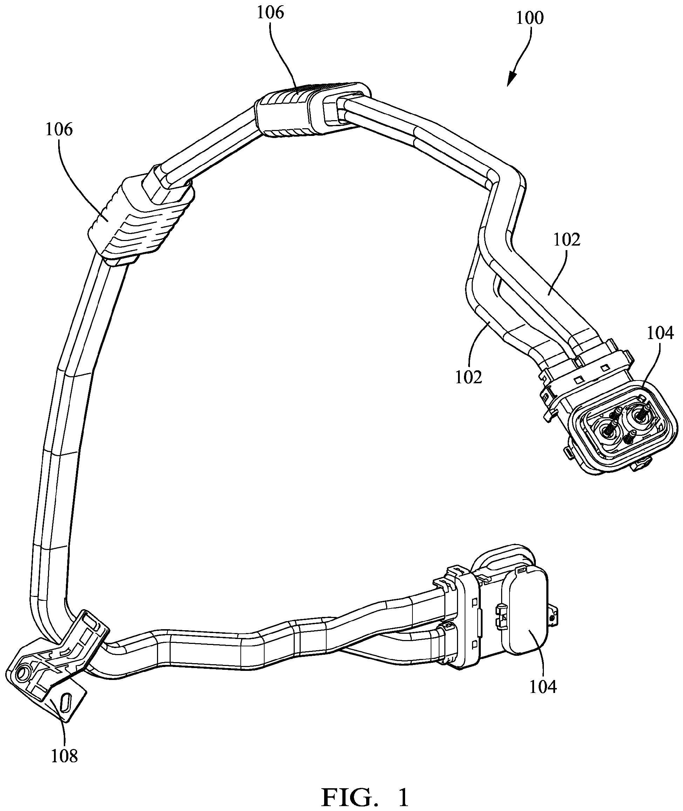

**FIG. 1** is an isometric view of the electrical busbar assembly, hereafter referred to as the busbar assembly 100, having two electrically insulated busbar conductors, hereafter referred to as the busbar conductors 102, terminated by sealed electrical connector 104. The busbar conductors 102 are preferably formed of an aluminum-based material and have a polymeric dielectric material coating and insulating the outer surface. The polymeric coating may be a polyester (PET), polyethylene naphthalate (PEN), polyolefin, polyamide, or other dielectric polymer material selected based on the particular application of the busbar assembly 100. The busbar conductors 102 each have a generally rectangular cross sections.

Using an aluminum-based material rather than a copper-based material for the busbar conductors 102 provides weight and cost savings for the busbar assembly 100. The busbar conductors 102 are preferably arranged side-by-side in the sealed electrical connector 104 and stacked on top of each other in the middle portion of the busbar assembly 100 to minimize packaging space needed in the vehicle and to provide improved electromagnetic compliance (EMC) performance for the busbar assembly 100. The rigid nature of the busbar assembly 100 provides the ability to fully automate assembly both in-vehicle, during busbar preparation, and when attaching the connector to the busbar.

As further shown in **FIG. 1****,** the busbar assembly 100 may also include spacers or vibration dampers 106 that are designed to minimize motion of the busbar conductors 102 due to vibration that may cause metal fatigue. The vibration dampers 106 also hold the two insulated busbar conductors apart from one another to avoid inadvertent contract between the busbar conductors 102. The busbar assembly 100 may further include bracket 108 configured to secure the busbar assembly 100 to a structure, such as an electric vehicle body.

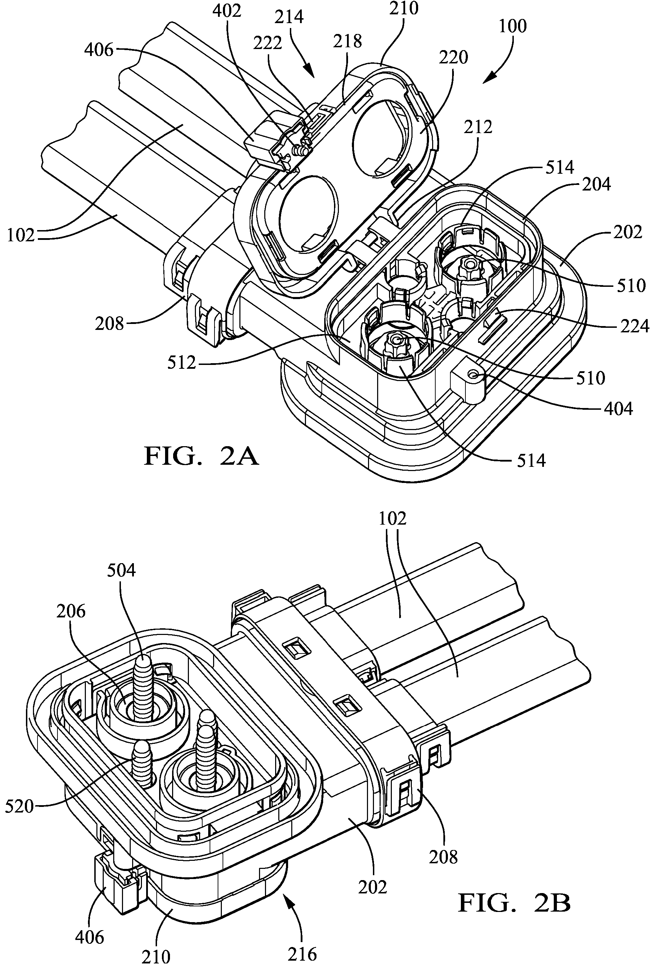

**FIGs 2A and 2B** show isolated views of the sealed electrical connector 104. The sealed electrical connector 104 includes an electrically insulative connector housing 202 that is preferably formed of a dielectric polymeric material such as a glass filled polybutylene terephthalate (PBT) or polyamide (NYLON) material. The electrically insulative connector housing 202 defines a cavity 204 that is configured to receive the busbar conductors 102 and electrical terminals 206 that are attached to the busbar conductors 102.

The electrical terminals 206 are formed of different electrically conductive material than the busbar conductors 102, preferably one having a higher electrical conductivity, such as a copper-based material. Outer surfaces of the electrical terminals 206 may be plated with an electrically conductive material having a greater electrical conductivity than a material forming the electrical terminals 206. For example, the electrical terminals 206 are formed of a copper-based material and the outer surfaces are plated with a silver-based material. Portions of the electrical terminals 206 may be disposed within apertures defined in the busbar conductors 102. The electrical terminals 206 may be attached to the busbar conductors 102 using a torsion welding process.

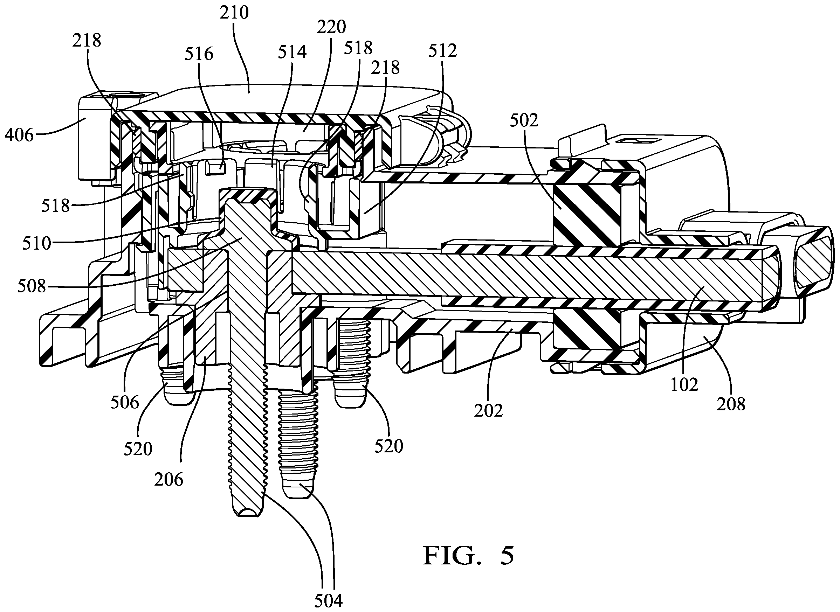

The sealed electrical connector 104 includes a busbar seal 502 (see **FIG. 5**) that is configured to seal the busbar conductors 102 to the electrically insulative connector housing 202. The busbar assembly 100 additionally includes a seal retainer 208 attached to the electrically insulative connector housing 202.

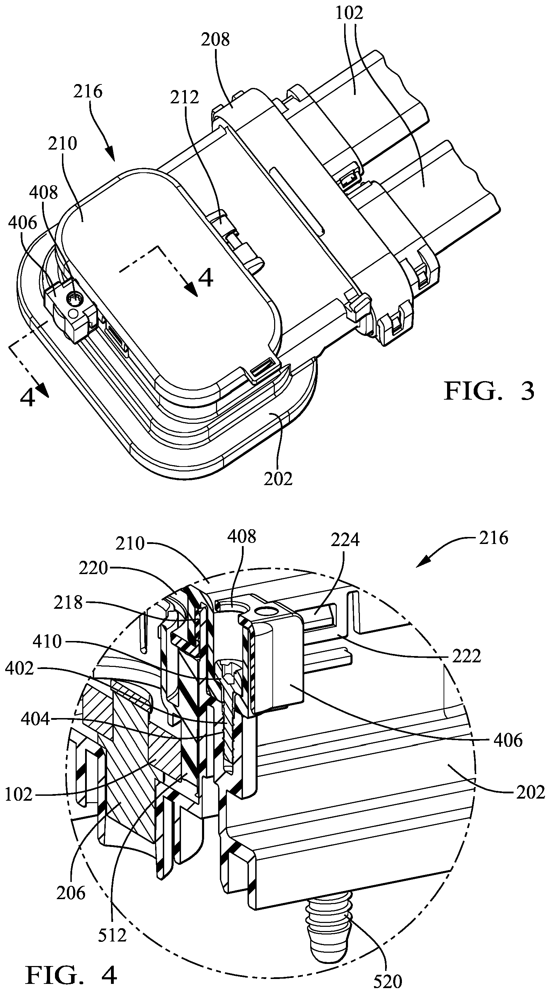

A cover 210 configured to enclose the cavity is attached to the electrically insulative connector housing 202 by a hinge 212 and is movable between an open position 214 shown in **FIG. 2A** and a closed position 216 shown in **FIG. 2B** (also see **FIG. 3**). The cover 210 includes a cover seal 218 configured to seal the cover 210 to the electrically insulative connector housing 202 and a cover seal retainer 220 configured to hold the cover seal 218 within the cover 210. The cover 210 and the electrically insulative connector housing 202 define corresponding latching features 222, 224 that are configured to releasably retain the cover 210 in the closed position 216.

As best shown in **FIG. 4****,** the cover 210 optionally includes a first threaded fastener 402 that is configured to be received within a threaded hole 404 in the electrically insulative connector housing 202 to maintain the cover 210 in the closed position 216. The cover 210 additionally includes a retainer 406 that is configured to hold the first threaded fastener 402 to the cover 210. The retainer 406 defines a portal 408 that is configured to allow a tool, such as a screwdriver (not shown), to access a head 410 of the first threaded fastener. Alternative embodiments of the busbar assembly may be envisioned which do not include the first threaded fastener 402, threaded hole 404, retainer 406, or portal 408 in order to reduce packaging size of the busbar assembly and/or where connector position assurance features may not be required.

As shown in **FIG. 5****,** the sealed electrical connector 104 also includes a pair of second threaded fasteners 504 disposed within the cavity 204 and configured to extend through apertures 506 in the electrical terminals 206. The heads 508 of the second threaded fasteners 504 comprises electrically insulative caps 510 to protect against inadvertent contact by a tool or the finger of an assembly operator with the second threaded fasteners 504 when the busbar conductors 102 are energized. The electrically insulative connector housing 202 also includes an electrically insulative inner connector housing 512 that has retention features that are configured to retain the heads 508 of the second threaded fasteners 504 within the cavity 204 and to retain the heads 508 of the second threaded fasteners 504 in a pre-staged position such that the heads 508 of the second threaded fasteners 504 are separated from the electrical terminals 206. As shown in **FIG. 5****,** the retention features have a plurality of curved flexible arms 514 extending above the electrical terminals 206. The plurality of curved flexible arms 514 have upper projections 516 and lower projections 518 and the heads 508 are retained between the upper projections 516 and the lower projections 518 when the heads 508 are in the pre-staged position.

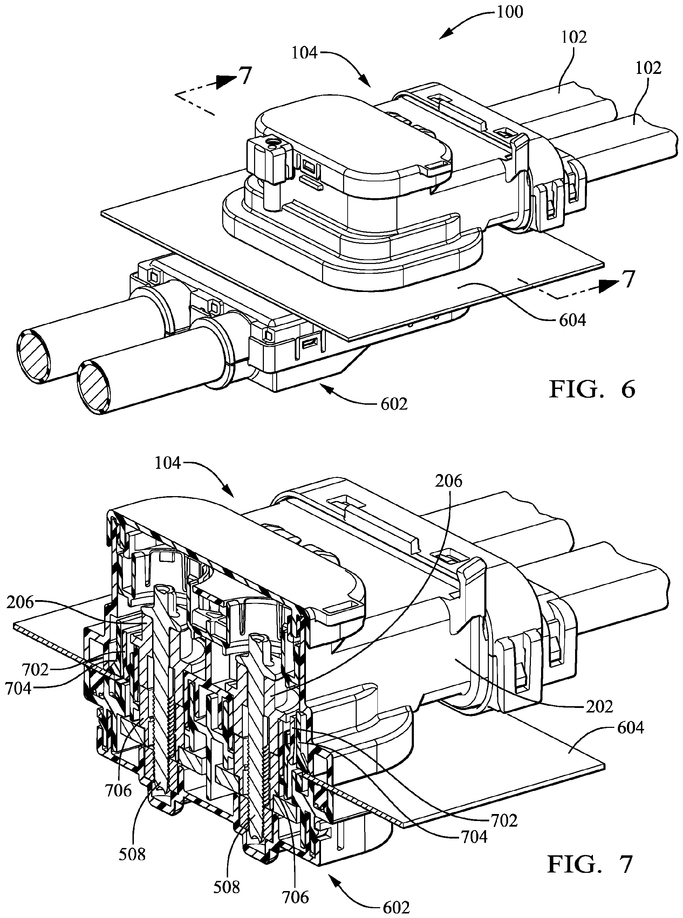

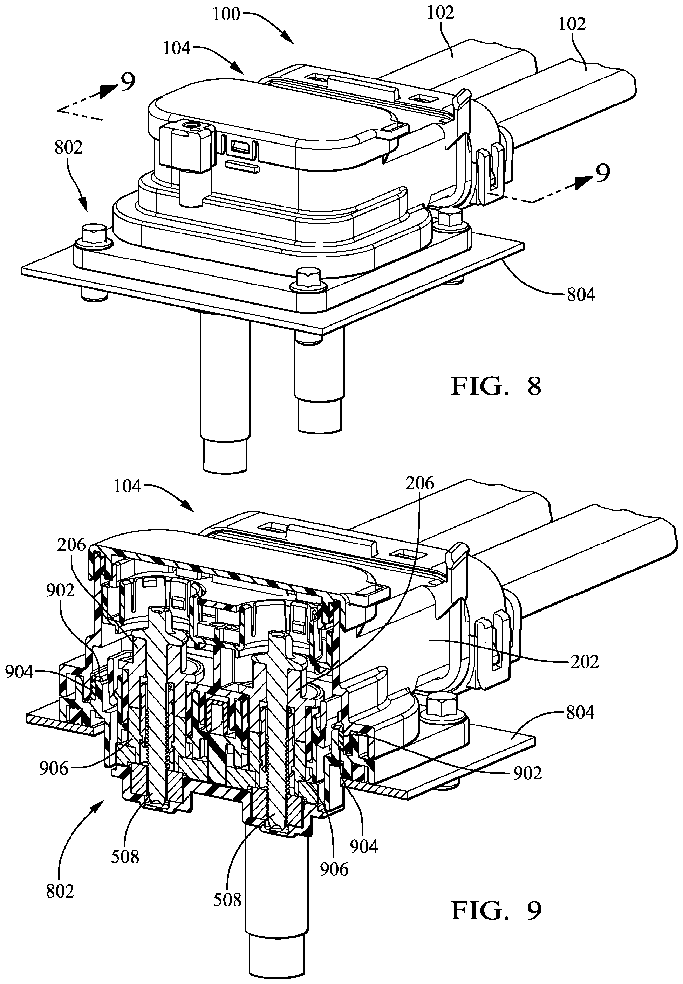

The busbar assembly 100 also includes a pair of third threaded fasteners 520 that are configured to secure the electrically insulative connector housing 202 to a mating connector 602 as shown in **FIG. 6** or to a mating header connector 802 as shown in **FIG. 8****.**

**FIG. 6** illustrates the busbar assembly 100 attached to the mating connector 602 through an opening (not shown) in a substrate 604, such vehicle panel of case of a battery pack.

As shown in **FIG. 7****,** the electrically insulative connector housing 202 defines a shroud 702 encircling the electrical terminals 206. The shroud 702 is configured to receive and interface with a perimeter seal 704 of the mating connector 602, thereby sealing the electrically insulative connector housing 202 to the mating connector 602. As further shown in **FIG. 7****,** the second threaded fasteners 504 are received within threaded apertures in mating electrical terminals 706 to connect and secure the electrical terminals 206 to the electrical terminals 706.

**FIG. 8** illustrates the busbar assembly 100 attached to the mating header connector 802 which is attached to a substrate 804, such vehicle panel of case of a battery pack.

As shown in **FIG. 9****,** the electrically insulative connector housing 202 also defines a groove 902 encircling the electrical terminals 206 containing a face seal 904 configured to interface with a mating header connector 802 which is of a different design than mating connector 602, thereby sealing the electrically insulative connector housing 202 to the mating header connector 802. As further shown in **FIG. 9****,** the second threaded fasteners 504 are received within threaded apertures in mating electrical terminals 906 to connect and secure the electrical terminals 206 to the electrical terminals 906.

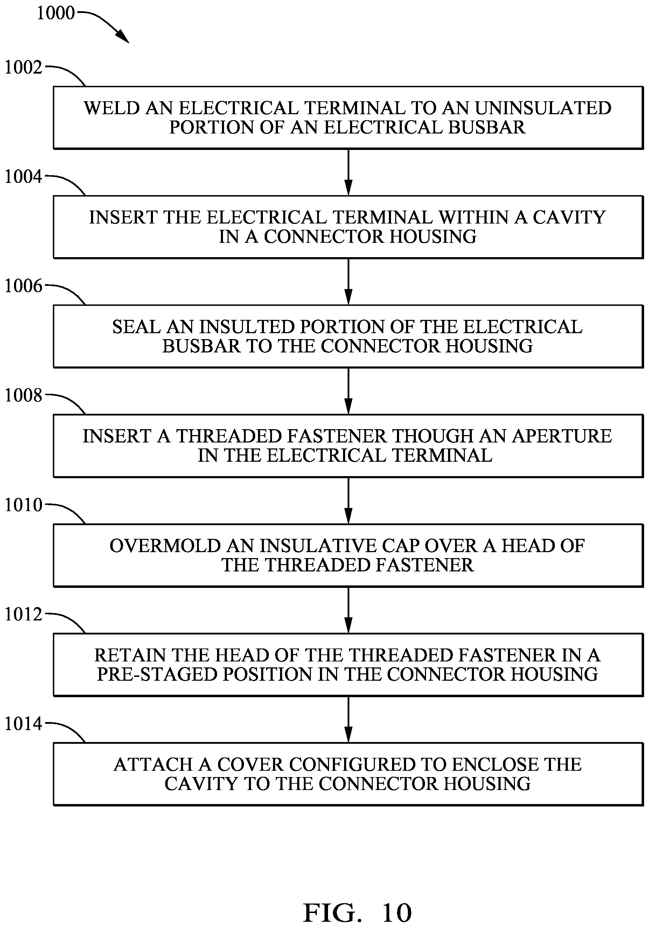

**FIG. 10** is a flowchart of a method 1000 of manufacturing an electrical busbar assembly, such as the busbar assembly 100 described above.

At step 1002, an electrical terminal 206 is welded to an uninsulated portion of a busbar conductor 102. The electrical terminal 206 may be welded to the uninsulated portion of a busbar conductor 102 using a torsion welding process.

At step 1004, the electrical terminal 206 is inserted within a cavity 204 of an electrically insulative connector housing 202.

At step 1006, an insulated portion of the busbar conductor 102 is sealed to the electrically insulative connector housing 202, for example by a busbar seal 502 between the busbar conductor 102 and the electrically insulative connector housing 202. In other embodiments, the busbar conductor 102 may be sealed to the electrically insulative connector housing 202 using alternative means, such as injecting a viscous sealing material, such as a silicone-based sealant, between the busbar conductor 102 and the electrically insulative connector housing 202 and curing the sealing material into a solid form.

At step 1008, a threaded fastener 504 is inserted through an aperture in the electrical terminal 206.

The method 1000 may also include optional step 1010 in which an electrically insulative cap 510 is overmolded over a head 508 of the threaded fastener 504.

The method 1000 may also include optional step 1012 in which the head 508 of the threaded fastener 504 is retained in a pre-staged position in the electrically insulative connector housing 202.

At step 1014, a cover 210 is attached to the electrically insulative connector housing 202. The cover 210 is configured to enclose the cavity 204. The cover 210 includes a cover seal 218 configured to seal the cover 210 to the electrically insulative connector housing 202.

The busbar conductors 102, electrical terminals 206, and second threaded fasteners 504 are fully touch protected, i.e., "finger-safe" when the cover is in the open position 214 as shown in **FIG. 2A** due to the electrically insulative caps 510 and the electrically insulative inner connector housing 512. The electrically insulative connector housing 202 is fully sealed to the busbar conductors 102 by the cover seal 218 and the busbar seal 502 and is capable of withstanding harsh operating environments without the use of additional metal tubes. The busbar assembly 100 utilizes the first threaded fastener 402, second threaded fasteners 504, and third threaded fasteners 520 to provide connector position assurance, the conductor termination, and mating assist. The illustrated busbar assembly 100 is capable of mating with traditional headers, bulkhead connectors, to other wiring harnesses, or optionally directly to a vehicle charging inlet connector.

The busbar assembly 100 is modular, thereby allowing it to accept a perimeter seal 704 on a mating connector 602 as shown in **FIG. 7** or provide a face seal 904 housed in the groove 902 as shown in **FIG. 9****.** The busbar assembly 100 uses the busbar seal 502 seal as shown in **FIG. 5** to seal the electrically insulative connector housing 202 directly to the insulation of the busbar conductors 102, and a cover seal 218 shown in **FIG. 2A** to provide full environmental sealing. The cross-section views of **FIG. 5** show the seals and bolted interfaces within the connector. **FIG. 5** also shows the machined/stamped busbar preparation, welded contact sleeve, overmolded termination bolt, mat seal, and seal retainer.

The rigid nature of the busbar assembly 100 and use of the second and third threaded fasteners 504 and 520 provides the ability to fully automate assembly both in-vehicle, during busbar preparation, and when attaching the connector to the busbar.

While the illustrated examples shown herein are designed for use in an electrical vehicle, other embodiments of the sealed electrical connector and busbar assembly may be envisioned for use in alternative applications, such as industrial machines or electrical power transmission systems.

### Discussion of Possible Embodiments

The following are non-exclusive descriptions of possible embodiments of the present invention.

In some aspects, the techniques described herein relate to an electrical busbar connector. The electrical busbar connector includes an electrically insulative connector housing having a cavity configured to receive an electrical busbar including a first electrically conductive material. electrical busbar connector also incvludes an electrical terminal including a second electrically conductive material distinct from the first electrically conductive material. The electrical terminal is attached to the busbar. The electrical busbar connector further includes a busbar seal configured to seal the busbar to the connector housing.

The electrical busbar connector of the preceding paragraph can optionally include, additionally and/or alternatively any, one or more of the following features/steps, configurations and/or additional components.

In some embodiments, the electrical busbar connector further includes a cover configured to enclose the cavity; and a cover seal configured to seal the cover to the connector housing.

In some embodiments, the cover is attached to the connector housing by a hinge and is movable between an open position and a closed position.

In some embodiments, the cover and the connector housing define corresponding latching features configured to releasably retain the cover in the closed position.

In some embodiments, the cover further includes a first threaded fastener configured to be received within a threaded hole in the connector housing.

In some embodiments, the cover further includes a retainer configured to hold the first threaded fastener to the cover.

In some embodiments, the retainer defines a portal configured to allow a tool to access a head of the first threaded fastener.

In some embodiments, the electrical busbar connector further includes a second threaded fastener disposed within the cavity and configured to extend through an aperture in the electrical terminal and to attach the electrical terminal to a corresponding electrical terminal.

In some embodiments, a head of the second threaded fastener includes an electrically insulative cap.

In some embodiments, the connector housing includes an electrically insulative inner connector housing having retention features configured to retain the head of the second threaded fastener within the cavity and to retain the head of the second threaded fastener in a pre-staged position.

In some embodiments, the electrical busbar connector further includes a third threaded fastener configured to secure the connector housing to a mating connector housing containing the corresponding electrical terminal.

In some embodiments, the connector housing defines a shroud encircling the electrical terminal which is configured to receive and interface with a perimeter seal of the mating connector housing, thereby sealing the connector housing to the mating connector housing.

In some embodiments, the connector housing defines a groove encircling the electrical terminal containing a face seal configured to interface with the mating connector housing, thereby sealing the connector housing to the mating connector housing.

In some embodiments, the electrical terminal has a plated surface including a material having a greater electrical conductivity than a material forming the electrical terminal.

In some embodiments, a portion of the electrical terminal is disposed within an aperture defined in the busbar.

In some embodiments, the electrical busbar is a first electrical busbar, wherein the electrical terminal is a first electrical terminal, wherein the connector housing is further configured to receive a second electrical busbar including the first electrically conductive material attached to a second electrical terminal including the second electrically conductive material.

In some embodiments, the first busbar and the second busbar each have a generally rectangular cross section, wherein uninsulated portions of the first busbar and the second busbar disposed within the connector housing are aligned along major axes of their rectangular cross sections and wherein insulated portions of the first busbar and the second busbar are aligned along minor axes of their rectangular cross sections.

In some aspects, the techniques described herein relate to a method of manufacturing an electrical busbar assembly. The metod incldues the steps of welding an electrical terminal to an uninsulated portion of an electrical busbar, inserting the electrical terminal within a cavity in an electrically insulative connector housing, sealing an insulated portion of the electrical busbar to the connector housing, inserting a threaded fastener through an aperture in the electrical terminal and attaching a cover to the connector housing configured to enclose the cavity. The cover includs a cover seal configured to seal the cover to the connector housing.

The method of the preceding paragraph can optionally include, additionally and/or alternatively any, one or more of the following features/steps, configurations and/or additional components.

In some embodiments, the method further includes welding the electrical terminal to the uninsulated portion of the electrical busbar using a torsion welding process.

In some embodiments, the connector housing includes retention features configured to retain a head of the threaded fastener within the cavity and the method further includes retaining the head of the threaded fastener in a pre-staged position and overmolding an insulative cap over the head of the threaded fastener.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. Are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. An electrical busbar connector (104), comprising:
an electrically insulative connector housing (202) having a cavity (204) configured to receive an electrical busbar (102) comprising a first electrically conductive material and an electrical terminal (206) attached to the busbar (102) comprising a second electrically conductive material distinct from the first electrically conductive material; and
a busbar seal (502) configured to seal the busbar (102) to the connector housing (202).

2. The electrical busbar connector (104) in accordance with claim 1, further comprising:
a cover (210) configured to enclose the cavity (204); and
a cover seal (218) configured to seal the cover (210) to the connector housing (202).

3. The electrical busbar connector (104) in accordance with claim 2, wherein the cover (210) is attached to the connector housing (202) by a hinge (212) and is movable between an open position (214) and a closed position (216).

4. The electrical busbar connector (104) in accordance with claim 2 or 3, wherein the cover (210) and the connector housing (202) define corresponding latching features (222, 224) configured to releasably retain the cover (210) in the closed position (216).

5. The electrical busbar connector (104) in accordance with any one of claims 2, 3 or 4, wherein the cover (210) further comprises a first threaded fastener (402) configured to be received within a threaded hole (404) in the connector housing (202).

6. The electrical busbar connector (104) in accordance with claim 5, wherein the cover (210) further comprises a retainer (406) configured to hold the first threaded fastener (402) to the cover (210).

7. The electrical busbar connector (104) in accordance with claim 6, wherein the retainer (406) defines a portal (408) configured to allow a tool to access a head (410) of the first threaded fastener (402).

8. The electrical busbar connector (104) in accordance with any one of the preceding claims, further comprising:
a second threaded fastener (402) disposed within the cavity (204) and configured to extend through an aperture (506) in the electrical terminal (206) and to attach the electrical terminal (206) to a corresponding electrical terminal (706, 906).

9. The electrical busbar connector (104) in accordance with claim 8, wherein a head (410) of the second threaded fastener (402) comprises an electrically insulative cap (510).

10. The electrical busbar connector (104) in accordance with claim 8 or 9, wherein the connector housing (202) comprises an electrically insulative inner connector housing (512) having retention features (516, 518) configured to retain the head (410) of the second threaded fastener (402) within the cavity (204) and to retain the head (410) of the second threaded fastener (402) in a pre-staged position.

11. The electrical busbar connector (104) in accordance with any one of claims 8 to 10, further comprising a third threaded fastener configured to secure the connector housing (202) to a mating connector housing (602) containing the corresponding electrical terminal.

12. The electrical busbar connector (104) in accordance with any one of the preceding claims, wherein the connector housing (202) defines a shroud (702) encircling the electrical terminal (206) which is configured to receive and interface with a perimeter seal (704) of the mating connector housing (602), thereby sealing the connector housing (202) to the mating connector housing (602).

13. The electrical busbar connector (104) in accordance with any one of the preceding claims, wherein the connector housing (202) defines a groove (902) encircling the electrical terminal (206) containing a face seal (904) configured to interface with the mating connector housing (602), thereby sealing the connector housing (202) to the mating connector housing (602).

14. A method (1000) of manufacturing an electrical busbar assembly (100), comprising:
welding an electrical terminal (206) to an uninsulated portion of an electrical busbar (102);
inserting the electrical terminal (206) within a cavity (204) in an electrically insulative connector housing (202);
sealing an insulated portion of the electrical busbar (102) to the connector housing (202);
inserting a threaded fastener (504) through an aperture (506) in the electrical terminal (206); and
attaching a cover (210) to the connector housing (202) configured to enclose the cavity (204), the cover (210) comprising a cover seal (218) configured to seal the cover (210) to the connector housing (202).

15. The method (1000) in accordance with claim 14, wherein the connector housing (202) comprises retention features (516, 518) configured to retain a head (410) of the threaded fastener (504) within the cavity (204) and wherein the method (1000) further comprises:
retaining the head (410) of the threaded fastener (504) in a pre-staged position; and
overmolding an insulative cap (510) over the head (410) of the threaded fastener (504).
